# EUROPEAN PATENT APPLICATION

(11) **EP 1 089 040 A1**
(43) Date of publication of application: **04.04.2001**
(21) Application number: 00203341.3
(22) Date of filing: 26.09.2000
(51) Int. Cl.: F24D 3/14

(54) **Floor heating system**

(30) Priority: 29.09.1999 NL 1013166
(71) Applicant: Thermagas Nederland B.V., 3417 XJ Montfoort (NL)
(72) Inventor: Bonenkamp, Hubertus Bernardus Jozef, 3417 XH Montfoort (NL); Bonenkamp, Petrus Henrikus Jozef, 3417 HH Montfoort (NL)
(74) Representative: Van Breda, Jacobus

(57) **Abstract**

The invention relates to a floor heating system, comprising floor elements provided with grooves for the accommodation of tubing for carrying a thermal medium, and cover elements for the floor elements, wherein adjacent grooves of the floor elements have standardized positions and centre-to-centre distances, such as to allow the system to be extended by adding further floor elements. The floor elements can be laid on a subfloor without being fixed, and the cover elements can be placed upon the floor elements such that they cover the grooves at the upper side.

## Description

The invention relates to a floor heating system comprising floor elements provided with grooves for the accommodation of tubing for carrying a thermal medium, and cover elements for the floor elements, wherein adjacent grooves of the floor elements have standardized positions and centre-to-centre distances, such as to allow the system to be extended by adding further floor elements.

Such a floor heating system is known from US-A-5.788.152. The known system combines the constructive function of a floor and the heating function of a floor heating system. This means that the conventional floor heating system can only be installed whilst a building or house is under construction. In accordance, with the traditional floor heating system, the wall construction of the building is erected on the floor being formed by said traditional floor heating system.

The known floor heating system uses a cover element or cover elements having a heat conducting function. These cover elements follow the structure of the floor elements, and consequently exhibit also the grooves accommodating the tubing for carrying a thermal medium. Further, an elastomeric compound is used in the grooves. A disadvantage of this known system is that it is only practical when a hard floor covering is applied, such as with parquet floors or tiles. The use of carpeting, or floor covering in general, lacking an inherent structural strength is not really possible due to the presence of grooves at the upper side of the floor heating system.

The object of the invention is to provide a generally usable floor heating system that is to say, a floor heating system that is suitable for all conceivable floor coverings, while at the same time aiming at simple installation and utilization of the system both in buildings under construction and in existing buildings, as well as an optimal thermal conduction to the living-surface of the floor covering. Other advantages achieved with the floor heating system according to the invention will be discussed below.

The floor heating system according to the invention is characterized in that the floor elements can be laid on a subfloor without being fixed, and in that the cover elements can be placed upon the floor elements such that they cover the grooves at the upper side. This allows the floor heating system to be kept light in weight, especially when the floor elements are fabricated from mdf (medium density fibreboard). Moreover, it is possible to install the floor heating system according to the invention in existing rooms and not only in new housing developments.

Generally speaking, the advantage of the floor heating system according to the invention is that it is simple to install, that is to say the necessary work can be carried out easily and quickly, and that the floor heating system can be used immediately after installation. Optionally special sound insulating elements may be provided under the floor elements to reduce contact noise by approximately 10 db.

The floor heating system according to the invention can be applied very well to any chosen subfloor, but is especially suitable to be used on wooden subfloors.

In order to promote a fast response time to changes in heat supply and a good transfer of this heat to the living environment via the floor covering on the heating system, the cover elements should have a thermal conductivity at least equal to or better than iron.

A very suitable embodiment with which this can be realized effectively and at relatively low costs, is characterized in that the cover elements comprise an aluminium layer. The use of such an aluminium layer provides a very effective heat distribution with the favourable result that the floor temperature can be limited to 23 to 24°C in order to avoid excessive shrinkage or expansion, especially when wooden floor covering such as parquet and laminate floors are used.

A further advantage is that the bottoms of the grooves in the floor elements are provided with an adhesive layer for fixing the tubing.

In contrast with the conventional systems in which the tubing is secured by means of a snap fastening, this has the advantage of being simple to implement, while in addition a strong contact between the tubing and the bottom plate is realized. This latter effect is especially valuable with regard to the above-mentioned uniform distribution of heat over the floor.

It is further desirable that at the side directed toward the floor, the cover elements be provided with an adhesive layer. This adhesive layer becomes active only after the removal of a protective film. One thing and another thus promotes the simple installation of the floor heating system. The use of such cover elements has a protective function with regard to the tubing.

It is further advantageous for the adjacent floor elements to be connected by means of a tongue and groove joint. This known joining technique makes it possible for the mutual spacing between the grooves for the accommodation of the tubing to be maintained accurately, even when a large number of floor elements are laid next to each other.

In a particular embodiment it is preferred for the floor elements to be fabricated from polyurethane. This provides a convenient possibility for using the floor heating system according to the invention in wet spaces such as bathrooms and the like.

The invention will now be elucidated with reference to the drawing which
in figure 1A and 1B, shows a top view and a side view of a floor element;
in figures 2 and 3, shows a top view of two further floor elements; and
in figure 4, shows a side view of a detail of the floor heating system according to the invention.

Similar parts in the figures carry identical reference numbers.

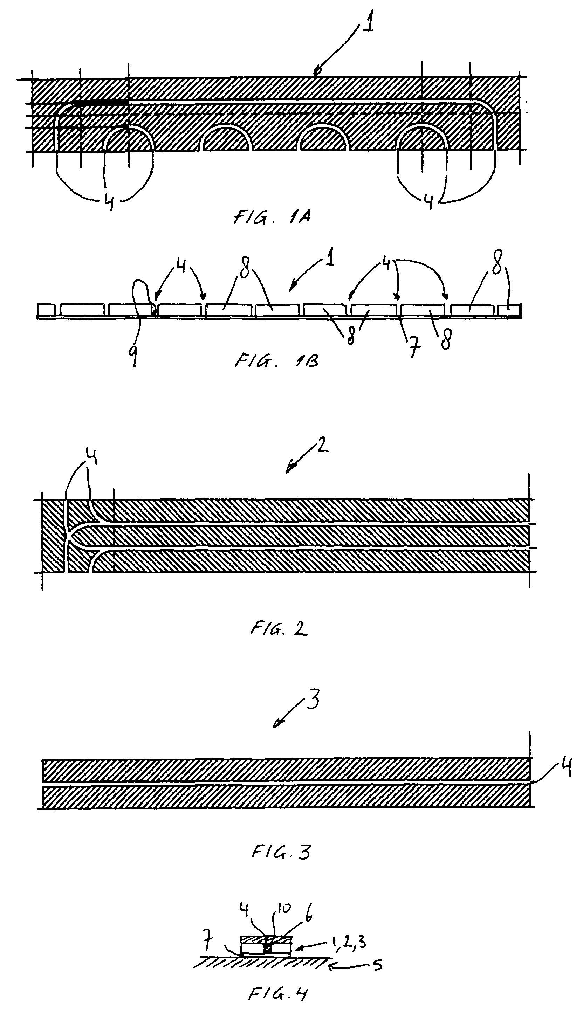

Referring first to figures 1A and 1B, attention is drawn to the fact that these figures show a so-called curve element forming part of the floor heating system according to the invention. This floor element carries reference number 1.

The figures 2 and 3 show further floor elements, respectively an inlet return element 2 and an extension element 3. The figures 1, 2 and 3 clearly show that the floor elements 1, 2 and 3 are provided with recesses or grooves 4, serving for the accommodation of tubing for carrying a thermal medium, usually water.

As schematically shown in figure 4, the floor elements 1, 2, 3 can be laid loosely upon a subfloor 5. The subfloor may be any conceivable floor; especially wooden subfloors can be used in combination with the floor heating system according to the invention. In accordance with the invention, the recesses 4 are formed as grooves provided in the floor elements 1, 2, 3, as is clearly shown in the figures 1A and 1B. The easiness of laying and the simplicity of extending the system is served by the fact that adjacent grooves 4 of the floor elements 1, 2, 3 have both a standardized position in the floor elements and a standardized centre-to-centre distance, for example 12 cm.

Figure 4 shows that the floor elements 1, 2, 3 are provided with a cover element 6, whose dimensions substantially coincide with the dimensions of the floor elements 1, 2, 3. With a number of standard floor elements as shown in the figures 1, 2 and 3 the system can be applied in any chosen space. It is advantageous for the floor elements 1, 2 and 3 to be made of mdf (medium density fibreboard), especially when the floor heating system according to the invention is applied to a wooden subfloor. When used in wet spaces, the floor elements 1, 2, 3 and/or the cover elements 6, are preferably made of polyurethane.

Figure 4, shows that the floor elements 1, 2, 3 comprise a bottom plate 7. This is even better visible in figure 1B, which also shows that said bottom plate 7 comprises elements 8 defining the grooves 4. Preferably the bottom plate 7 is integrally formed with the elements 8. This may be realized simply by a milling operation to provide the (mdf) plate with the grooves 4.

It is further desirable for the floor elements 1, 2, 3 to be provided at the bottom side 9 of the grooves 4 with an adhesive layer for fixing the tubing (see figure 1B).

Attention is further drawn to the fact that at the side directed toward the floor, the cover elements 6 are provided with an adhesive layer for fixing the floor elements 1, 2, 3. A function of said cover elements 6 is to protect the tubing in the grooves 4 and in addition to serve the thermal conduction and distribution. Preferably the function of thermal conductivity is at least a thermal conductivity equal to or better than iron. To this end the cover elements 6 are preferably fabricated from aluminium or comprise at least an aluminium layer.

Not shown in the figures but nevertheless quite obvious to the expert, is the embodiment of the floor heating system wherein the adjacent floor elements 1, 2, 3 are connected by means of a tongue and groove joint.

The detail of the floor heating system according to the invention illustrated in figure 4 also shows that in the groove 4 of the floor element 1, 2, 3, a close-fitting tube 10 is provided directly under the cover plate 6.

The floor heating system according to the invention is characterized in that it is suitable to be used under parquet and laminate floors and that it can be applied on wooden subfloors and all other conceivable subfloors. The construction height of the floor heating system according to the invention is only 2 cm, and the various elements constituting the system are light-weight and easy to process.

With the floor heating system according to the invention it is possible to reduce the warming-up time to a mere 20 minutes.

## Claims

1. A floor heating system, comprising floor elements (1,2,3) provided with grooves (4) for the accommodation of tubing for carrying a thermal medium, and cover elements for the floor elements, wherein adjacent grooves (4) of the floor elements (1,2,3) have standardized positions and centre-to-centre distances, such as to allow the system to be extended by adding further floor elements, **characterized** in that the floor elements (1,2,3) can be laid on a subfloor (5) without being fixed, and in that the cover elements (6) can be placed upon the floor elements (1,2,3) such that they cover the grooves (4) at the upper side.

2. A floor heating system according to claim 1, **characterized** in that the cover elements (6) have a thermal conductivity at least equal to or better than iron.

3. A floor heating system according to claim 1 or 2, **characterized** in that the cover elements (6)comprise an aluminium layer.

4. A floor heating system according to one of the claims 1-3, **characterized** in that the bottoms (9) of the grooves (4) in the floor elements (1,2,3) are provided with an adhesive layer for fixing the tubing.

5. A floor heating system according to one of the preceding claims, **characterized** in that at the side directed toward the floor, the cover elements (6) are provided with an adhesive layer.

6. A floor heating system according to one of the claims 1-5, **characterized** in that adjacent floor elements (1,2,3) are connected by means of a tongue and groove joint.

7. A floor heating system according to one of the claims 1-6, **characterized** in that the floor elements (1,2,3) are fabricated from mdf (medium density fibreboard).

8. A floor heating system according to one of the claims 1-6, **characterized** in that the floor elements (1,2,3) are fabricated from polyurethane.
